# EUROPEAN PATENT APPLICATION

(11) **EP 3 135 171 A1**
(43) Date of publication of application: **01.03.2017**
(21) Application number: 16166076.6
(22) Date of filing: 19.04.2016
(51) Int. Cl.: A47L 9/16

(54) **CYCLONE SEPARATING DEVICE, DUST COLLECTING ASSEMBLY AND CLEANER**

(30) Priority: 28.08.2015 CN 201510542071; 28.08.2015 CN 201520662333 U
(71) Applicant: Jiangsu Midea Cleaning Appliances Co., Ltd., Xiangcheng Economic Development Zone Suzhou, Jiangsu 215100 (CN); Midea Group Co., Ltd., Foshan, Guangdong 528311 (CN)
(72) Inventor: GU, Youwei, 215131 Suzhou Jiangsu (CN); GUO, Yijun, 215131 Suzhou Jiangsu (CN)
(74) Representative: Romano, Giuseppe

(57) **Abstract**

A cyclone separating device (2), a dust collecting assembly (100), and a cleaner are provided. The cyclone separating device (2) includes: a first cyclone (21) defining a longitudinal axis and an inlet passage; a cyclone assembly (22) comprising a plurality of second cyclones (221) which are arranged in parallel at an upper portion of the first cyclone (21) along a circumferential direction of the first cyclone, a first guide channel (24) being defined between two second cyclones (221), the first guide channel (24) guiding dust-laden air exiting therefrom along a tangential line of a circumferential wall of the second cyclone (221) to an outer circumferential of the cyclone assembly (22), each second cyclone (221) defining a notch (2211) for introducing the primarily-separated air into the second cyclone (221) tangentially; a filtering member (6) detachably arranged at the outer circumferential side of the cyclone assembly (22), wherein the primarily-separated air surrounding outer circumferential of the cyclone assembly is tangentially introduced into the second cyclones (221) respectively via the filtering member (6) and the notch (2211)

## Description

### FIELD

The present disclosure relates to the field of cleaning technology, and more particularly to a cyclone separating device, a dust collecting assembly having the cyclone separating device and a cleaner comprising the dust collecting assembly.

### BACKGROUND

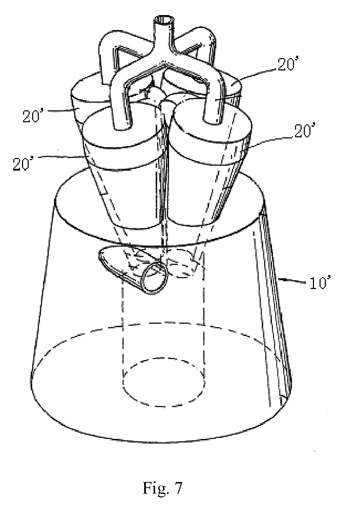

Disclosure patent of China ZL01807570.3 discloses an apparatus for separating particles from a liquid fluid, in particular, as shown in Fig. 7, the apparatus includes an upstream cyclonic separator 10' and a plurality of downstream cyclonic separators 20' arranged parallel to each other. Each of the downstream cyclonic separators 20' projects, at least in part, into the interior of the upstream cyclonic separator 10'. This kind of apparatus for separating particles from a liquid fluid generally has large height, occupies large space and has relatively low separating efficiency.

### SUMMARY

The present disclosure seeks to solve at least one of the problems existing in the prior art.

In this connection, the present disclosure provides a cyclonic separating device, which is simple to assemble, convenient to replace, and high in separation efficiency.

Furthermore, the present disclosure provides a dust collecting assembly having the cyclonic separating device.

Furthermore, the present disclosure provides a cleaner having the dust collecting assembly.

A cyclone separating device according to a first aspect of the present disclosure includes: a first cyclone defining a longitudinal axis and an inlet passage which defines a first inlet and a first outlet; a cyclone assembly comprising a plurality of second cyclones which are arranged in parallel at an upper portion of the first cyclone along a circumferential direction of the first cyclone, a first guide channel being defined between two second cyclones, being communicated with the first outlet and guiding air in a direction surrounding an outer circumferential of the cyclone assembly to separate primarily dust from the dust-laden air, each second cyclone defining a notch for introducing the primarily-separated air into the second cyclone tangentially to separate secondly dust from the primarily-separated air, and each second cyclone defining an opening at each of upper and lower ends thereof; a filtering member detachably arranged at the outer circumferential side of the cyclone assembly, wherein the primarily-separated air surrounding outer circumferential of the cyclone assembly is tangentially introduced into the second cyclones respectively via the filtering member and the notch.

With the cyclonic separating device according to embodiments of the present disclosure, since the filtering member is detachably arranged at the outer circumferential side of the cyclone assembly, the filtering member may be used to separate the dust-laden air, and easy to be removed and cleaned after being used for a certain period of time. Furthermore, the cost is lower and the structure is simpler. In addition, the height of the entire dust cup may be made use of to perform the primary separation of the fluid sufficiently, thus enhancing the separation efficiency of dust.

In some embodiments, pluralities of filtering members are provided and detachably disposed corresponding to the notches of the second cyclones respectively.

In some embodiments, one filtering member is provided and formed as a C-shape covering at least a part of the outer circumferential surface except the first guide channel.

In some embodiments, the filtering member is a filtering screen or an inserting piece having filtering holes.

In some embodiments, each filtering member is pluggable connected with the cyclone assembly respectively.

Optionally, an inserting groove is formed in a side wall surface of each second cyclone away from the longitudinal axis, and the filtering members are configured to pluggably insert into the grooves.

In some embodiments, each filtering member has an arc shape, and the plurality of the filtering members define a substantially cylindrical outer circumferential surface with the cyclone assembly when the plurality of filtering members are assembled with the cyclone assembly.

In some embodiments, a connecting wall is connected to each second cyclone at one side of the notch and is tangential to the side wall of the second cyclone, and an extension plate is extended from the other side of the notch, wherein a second guide channel is defined between the connecting wall and the extension plate.

Optionally, the connecting wall connected to one second cyclone is extended, connected and tangential to the side wall of another second cyclone adjacent to the one second cyclone, the connecting wall at one side of the guide passage is parallel to a tangent line of the outer circumferential wall of the second cyclone at the other side of the guide passage.

Furthermore, the extension plate is parallel to the connecting wall.

In some embodiments, a distance between a center of the opening at the lower end of the second cyclone and the longitudinal axis is smaller than that between a center of the opening at the upper end of the second cyclone and the longitudinal axis.

In some embodiments, the first cyclone comprises: an inlet conduit extended along the longitudinal axis and defining upper and lower ends, the inlet passage being defined by the inlet conduit, the first inlet being defined by the upper end of the inlet conduit and the first outlet being defined by the lower end of the inlet conduit, a part of the side wall of the upper end of the air let conduit is cut to extend from the inlet conduit upwardly and spirally; an outer barrel surrounding the inlet conduit to define an annular dust collecting space, the lower end of each second cyclone being extended into the dust collecting space.

In some embodiments, the outer barrel comprises: a support surrounding the inlet conduit; a fine-dust collector surrounding the inlet conduit and disposed under the support, the lower end of each second cyclone being extended into the fine-dust collector.

In some embodiments, a projection of the first guide channel in a plane substantially perpendicular to the longitudinal axis has a helical or an arc shape.

In some embodiments, the first cyclone and the second cyclones are integrally formed.

In some embodiments, the dust collecting space defining a central axis coinciding with the longitudinal axis.

A dust collecting assembly according to a second aspect of the present disclosure includes: a dust cup; a cyclone separating device according to embodiments of the first aspect, which is disposed within the dust cup, wherein a first cyclone separating space is defined between the outer circumferential side of the first cyclone and the cyclone assembly and an inner wall of the dust cup; an upper cover disposed on a top of the dust cup and defining an outlet passage for discharging the air from the cyclone separating device; a lower cover disposed at a bottom of the dust cup and defining an inlet hole communicated with the first inlet of the first cyclone.

In some embodiments, the dust collecting assembly further includes: a secondly separating member disposed in the dust cup and connected with an upper end of the cyclone separating device, which having a plurality of via-holes corresponding to the upper ends of the second cyclone respectively.

In some embodiments, the dust collecting assembly further includes: a filter element disposed between the secondly separating member and the upper cover.

A cleaner according to a third aspect of the present disclosure includes: a dust cup; a cyclonic separating device. The cyclonic separating device includes: a dust cup; a dust collecting assembly according to embodiments of the second aspect.

According to some embodiments of the present disclosure, the cleaner is an upright vacuum cleaner.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the present disclosure will become apparent and more readily appreciated from the following descriptions on the embodiments made with reference to the drawings, in which:
Fig. 1 is a perspective view of a cyclone separating device and a dust cup according to an embodiment of the present disclosure;
Fig. 2 is a top view of a cyclone separating device according to an embodiment of the present disclosure;
Fig. 3 is an exploded view of a cyclone separating device according to an embodiment of the present disclosure;
Fig. 4 is a schematic view of a cyclone separating device, a lower cover of a dust cup and a secondly separating member according to an embodiment of the present disclosure;
Fig. 5 is an exploded view of a dust collecting assembly according to an

### embodiment of the present disclosure;

Fig.6 is a schematic view of a cleaner according to an embodiment of the present disclosure;
Fig.7 is a perspective view of a cyclone cleaner in the related art.

### Reference numerals in the drawings:

100: dust collecting assembly;
A: first cyclone separating space;
B: second cyclone separating space;
1: dust cup;
2: cyclone separating device;
21: first cyclone;
211: inlet conduit;
23: inlet passage;
2111: first inlet;
2112: first outlet;
212: outer barrel;
2121: support;
2122: fine-dust collector;
22: cyclone assembly;
221: second cyclone;
2211: notch;
2212: groove;
2213: opening at lower end of second cyclone;
2214: opening at upper end of second cyclone;
24: first guide channel;
25: connecting wall;
26: extension plate;
27: second guide channel;
3: dust collecting chamber;
4: dust collecting space;
5: upper cover;
51: outlet passage;
6: filtering member;
61: filtering hole;
7: lower cover;
71: inlet hole;
72: splitters;
8: secondly separating member;
81: via-hole;
82: stopping rib;
9: filter element

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

In the specification, it should be understood that, the terms such as "central", "above", "below", "vertical", "horizontal", "top", "bottom", "inner", "outer" should be construed to refer to the orientation as then described or as shown in the drawings. These terms are merely for convenience and concision of description and do not alone indicate or imply that the device or element referred to must have a particular orientation. Thus, it cannot be understood to limit the present disclosure. In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this feature. In the description of the present disclosure, "a plurality of" means two or more this features, unless specified otherwise herein.

In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

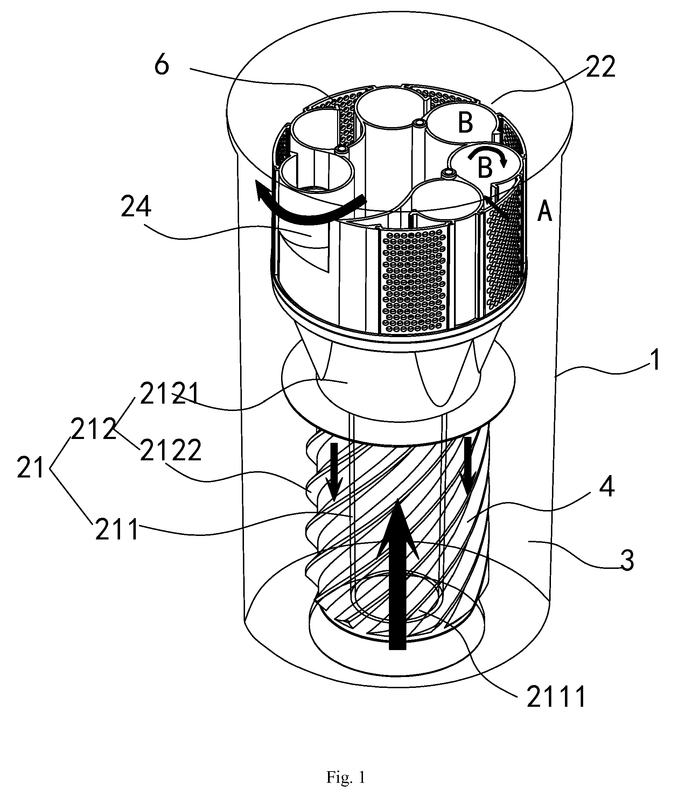

The cyclonic separating device according to embodiments of the present disclosure will be described below in detail with reference to Figs.1-4. The cyclonic separating device 2 may be used in a dust collecting assembly 100 of a cleaner or other surface cleaning apparatus, for separating the dust-laden air suctioned from a surface to be cleaned. For example, the cyclonic separating device 2 may be disposed in a dust cup 1 of the dust collecting assembly 100.

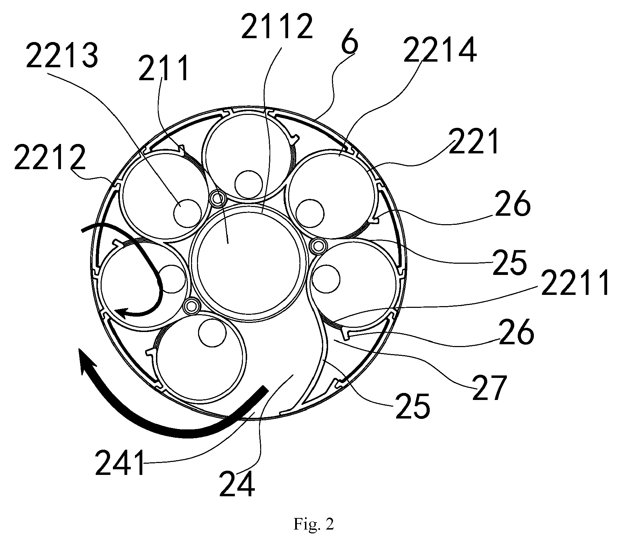

As shown in Figs.2-3, the cyclone separating device 2 may include a first cyclone 21, a cyclone assembly 22, and a filtering member 6. The first cyclone 21 defines a longitudinal axis X and an inlet passage 23 which defines a first inlet 2111 and a first outlet 2112.

As shown in Figs. 1-4, the cyclone assembly 22 includes a plurality of second cyclones 221 which are arranged in parallel at an upper portion of the first cyclone 21 along a circumferential direction of the first cyclone 21. A first guide channel 24 is defined between two neighboring second cyclones 221 of the plurality of second cyclones 221. The first guide channel 24 is communicated with the first outlet 2112 and guiding dust-laden air exiting therefrom in a direction surrounding an outer circumferential of the cyclone assembly 2 to separate primarily dust from the dust-laden air. Therefore, when the cyclone separating device 2 is disposed in the dust collecting assembly 100, for example, in the dust cup 1, a first cyclone separating space A is defined between the dust cup 1 and the cyclone separating device 2, for cleaning and separating the stream. Therefore, after the dust-laden air being guided into the first cyclone separating space A through the inlet passage 23 and the first guide channel 24, the first cyclonic separating space A may be used as a primary separation portion of the cyclonic separating device 20 for performing primary separation on the stream entering the cyclonic separating device 20, such that large particles or dust may be separated from the stream. In other words, one end of the inlet passage 23 is communicated with an inlet hole 71, and the other end thereof is communicated with a first end of the first guide channel 24, a second end of which is communicated with the first cyclonic separating space A. Furthermore, the air stream out of the first guide channel 24 moves into the first cyclonic separating space A in a direction surrounding the outer circumferential of the cyclone assembly.

As shown in Fig. 2-3, each second cyclone 221 defines a notch 2211 for introducing the primarily-separated air into the second cyclone 221 tangentially to separate secondly dust from the primarily-separated air, and each second cyclone 221 defines an opening at each of upper and lower ends thereof. A filtering member 6 is detachably arranged at the outer circumferential side of the cyclone assembly 2, so that the primarily-separated air surrounding the outer circumferential of the cyclone assembly may move tangentially into the second cyclones 221 through the filtering member 6 and the notch 2211, thus being cleaned and separated further in a second cyclone separating space. In other words, the dust-laden air is introduced into the first cyclonic separating space A via the guiding passage 24. After the cleaning and separating are completed primarily, the primarily-separated air enters into the plurality of second cyclones 221 through the filtering member 6 for secondary cleaning and separating. After the secondary cleaning and separating is performed in the second cyclones 221, the separated large particles or dust are dropped into the dust collecting space 4 under the second cyclones 221, and the clean air is discharged upward meanwhile.

As shown in Fig. 1, the plurality of second cyclones 221 are located downstream of the first cyclone 21, arranged circumferentially around the longitudinal axis X in parallel, and integrally received in the first cyclone 21.

With the cyclonic separating device according to embodiments of the present disclosure, since the filtering member 6 is detachably arranged at the outer circumferential side of the cyclone assembly 2, the filtering member 6 may be used to separate the dust-laden air, and easy to be removed and cleaned after being used for a certain period of time. Furthermore, the cost is lower and the structure is simpler. In addition, the height of the entire dust cup 1 may be made use of to perform the primary separation of the fluid sufficiently, thus enhancing the separation efficiency of dust.

In one embodiment, pluralities of filtering members 6 are disposed and correspond to the notches 2211 of the second cyclones respectively. As shown in Figs. 1-4, each filtering member 6 is disposed corresponding to one or more notches 2211. Therefore, the primarily separated air from the first cyclonic separating space A is guided into the second cyclones 221 (i.e., the second cyclone separating space B) tangentially and directly, through the filtering member 6, is separated in the second cyclone separating space B. In other words, the large particles in the air stream is primarily separated before the air moving into the second cyclone separating space B, thus enhancing the separation efficiency. In addition, since the filtering members 6 are detachable, the filtering members 6 of one or some cyclones may be removed and cleaned conveniently.

In another embodiment, the filtering member 6 may have a C-shape covering at least a part of the outer circumferential surface except the first guide channel 24. In other word, one filtering member 6 may be disposed at the part of the outer circumferential surface except the first guide channel 24, corresponding to some or all of the notches, for filtering the air moved into the second cyclone 221(i.e., the second cyclone separating space B). Therefore, the large particles in the air stream is primarily separated before the air moving into the second cyclone separating space B, thus enhancing the separation efficiency. In addition, one filtering member is much easier to be detached, assembled, and manufactured. For ease of description, in the illustration of present disclosure below, pluralities of filtering members will be described as Illustrative examples.

Alternatively, the filtering member 6 may be a filtering screen (not shown). Of course, the filtering member 6 may be an inserting piece having filtering holes 61. The filtering holes in the filtering screen or the inserting piece may be arranged in multiple concentric circles, or in rows and columns, for filtering evenly. In addition, the diameter ranges of the filtering holes 61 are not limited. Small diameter of the hole results in an enhanced filtering efficiency, while large diameter thereof may get high exhaust efficiency, thus reducing the loss of the motor power. In practical application, a proper diameter of the filtering holes 61 may be chosen according to the practical demands.

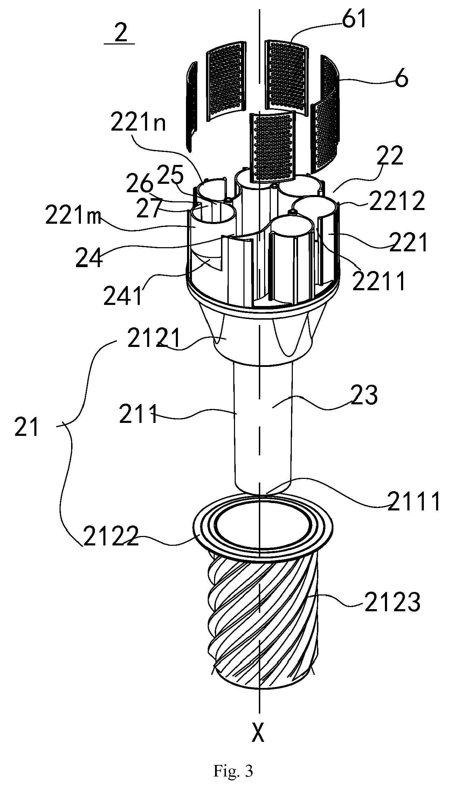

As shown in Fig.3, in some embodiments, each filtering member 6 is inserted into the cyclone assembly 2. Specifically, as shown in Figs.2-3, an inserting groove 2212 is formed in a side wall surface of each second cyclone 221 away from the longitudinal axis, and the filtering members 6 are configured to insert into and pull out of the inserting grooves 2212 respectively. In other words, there are two inserting grooves toward different directions disposed on one second cyclone 221, such that the neighbor inserting grooves of two neighbor second cyclones face to each other for the filtering member 6 to be inserted in. It is understood that a groove structure with openings in two sides thereof may also be provided on the second cyclones 221, such that the filtering member 6 can be inserted thereinto, which will not be described in detail.

Alternatively, as shown in Fig.2, each filtering member 6 may have an arc shape. The plurality of the filtering members 6 may define a substantially cylindrical outer circumferential surface with the cyclone assembly 2 when the plurality of filtering members 6 are assembled with the cyclone assembly 2, specially with the second cyclones 221, thus saving the space and enhancing the filtering efficiency.

The first cyclones 21 and the second cyclones 22 will be described in detail with reference to Figs.1-4.

In one embodiment, as shown in Fig.1 and Figs.3-4, the first cyclone 21 includes an inlet conduit 211 and an outer barrel 212, the inlet conduit 211 is extended along the longitudinal axis X and defines upper and lower ends, the inlet passage 23 is defined by the inlet conduit 211. The first inlet 2111 is defined by the upper end of the inlet conduit 211, and the first outlet 2112 is defined by the lower end of the inlet conduit 211. Apart of the side wall of the upper end of the inlet conduit 211 is cut to extend from the inlet conduit 211 upwardly and spirally. An outer barrel 212 surrounding the inlet conduit defines an annular dust collecting space 4, and the lower end of each second cyclone 221 is extended into the dust collecting space 4. Alternatively, the dust collecting space defines a central axis coinciding with the longitudinal axis.

Therefore, as represented by arrow in Fig.1, the dust-laden air is guided into the first cyclone separating space A through the inlet passage 23 and the first guide channel 24, and enters into the first cyclonic separating space A. After the primary separation, the large particles drops into the dust collecting chamber 3 between the outer barrel 212 and the dust cup 1, while the primarily-separated air surrounding the outer circumferential of the cyclone assembly may move tangentially into the second cyclones 221 through the filtering member 6 and the notch 2211, thus being cleaned and separated further in a second cyclone separating space B. After the secondary cleaning and separating is performed in the second cyclones 221, the separated large particles or dust are dropped into the dust collecting space 4 under the second cyclones 221, and the clean air is discharged upward meanwhile.

In a further embodiment, the outer barrel includes a support 2121 and a fine-dust collector 2122. As shown in Fig.1, the support 2121 surrounds the inlet conduit. The fine-dust collector 2122 surrounds the inlet conduit, and is disposed under the support 2121. The lower end of each second cyclone 221 is extended into the fine-dust collector 2122. Alternatively, ash tanks are formed in the outer circumferential surface of the fine-dust collector 2122, which are extended helically, as shown in Fig. 3, so that the large particles or dust from the first cyclonic separating space A may drop downwards soundlessly and smoothly.

In one embodiment, a fluid outlet 241 of the guiding passage 24 is configured to flow the fluid into the first cyclones 21 tangentially in a plane perpendicular to the longitudinal axis X. In other words, if the longitudinal axis is in an up and down direction, then the fluid outlet 241 is configured to be in a horizontal direction, such that the air flow can enter the first cyclones 21 along the horizontal direction. Thus, as the air flow enters the first cyclones 21 tangentially and the guiding passage 24 and the fluid outlet 241 is located between two neighboring second cyclones 22, the air flow flowing upward from the bottom can separate fully along a circumferential direction and then enter the second cyclones 22 to perform the cyclonic separation. In addition, a dust accommodating space located at the bottom of the dust cup is also enlarged significantly, and the actually using dust accommodating volume increases more than 70% than a volume of the conventional dust collecting assembly as shown in Fig. 7.

Further, a projection of the first guide channel 24 in a plane substantially perpendicular to the longitudinal axis has a helical or an arc shape. Thus, the fluid outlet 241 may be conveniently configured, such that the fluid flows into the first cyclones 21 in a tangential direction.

In some embodiments, a connecting wall 25 is connected to each second cyclone 221 at one side of the notch 2211 and is tangential to the side wall of the second cyclone 221, and an extension plate 26 is extended from the other side of the notch 2211. A second guide channel is defined between the connecting wall 25 and the extension plate 26. Alternatively, the connecting wall 25 connected to one second cyclone 221 is extended, connected and tangential to the side wall of another second cyclone 221 adjacent to the one second cyclone 221, the connecting wall 25 at one side of the guide passage 27 is parallel to a tangent line of the outer circumferential wall of the second cyclone 221 at the other side of the guide passage 27. Further, the extension plate 26 is parallel to the connecting wall 25, such that the primarily separated air enters into the second cyclone 221 tangentially through the guide passage 27 smoothly and accurately, thus enhancing the separating efficiency further.

Here the two neighbor second cyclones 221m and 221n will be described in detail as an example with reference to Fig.2. One side of the connecting wall 25 of second cyclone 221m is tangential to the inner surface of the second cyclone 221m, and the other side of the connecting wall 25 of the second cyclone 221m is tangential to the outer surface of the second cyclone 221n. Therefore, the guide passage 27 formed between the connecting wall 25 and the extension plate 26 on the second cyclone 221m is tangential to the inner surface of the second cyclone 221m, so that the primarily separated air enters into the second cyclone 221m to be separated and cleaned.

In some embodiments, a distance between a center of the opening at the lower end of the second cyclone 221 and the longitudinal axis is smaller than that between a center of the opening at the upper end of the second cyclone 221 and the longitudinal axis. In other words, as shown in Fig.2, the lower end 2213 of the second cyclone 221 is much closer to the longitudinal axis, therefore the particles or dust from the lower end 2213 may drop smoothly into the dust collecting space 4 due to gravity.

Alternatively, the first cyclone 21 and the second cyclones 221 are integrally formed, thus reducing the number of times of opening the mould and the assembly cost.

The dust collecting assembly according to embodiments of the present disclosure will be described below in detail with reference to Figs.1-5. As shown in Fig.1, the dust collecting assembly 100 may include a dust cup 1, a cyclone separating device 2 abovementioned, an upper cover 5, and a lower cover 7.

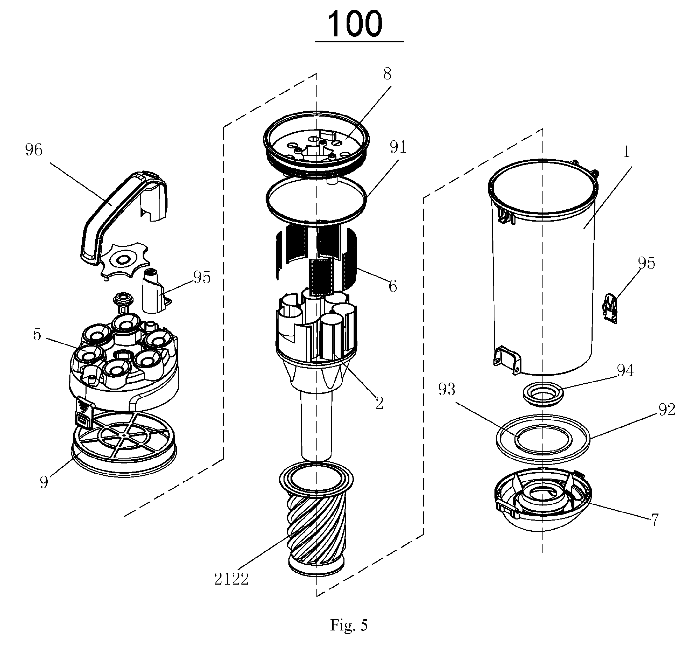

As shown in Fig.5, the cyclone separating device 2 is disposed within the dust cup 1, and the first cyclone separating space A is defined between the dust cup 1 and the cyclone separating device 2. The upper cover 5 is disposed on a top of the dust cup 1 and defines an outlet passage 51 for discharging the air from the cyclone separating device 2. The lower cover 7 is disposed at a bottom of the dust cup 1 and defines the inlet hole 71 communicated with the first inlet of the first cyclone 21. The inlet hole 71 is communicated to the first inlet 2111 of the first cyclone 21 and a suction member, for example, a nozzle 300, such that the dust-laden air is suctioned into the cyclone separating device 2 via the inlet hole 71, and separated into the clean air and the particles. Alternatively, the inlet hole 71 is formed in the central position of the lower cover 7.

Since the upper cover 5 and the lower cover 7 are connected detachably to the dust cup 1, the assembling, detaching, and using of the dust collecting assembly are more convenient.

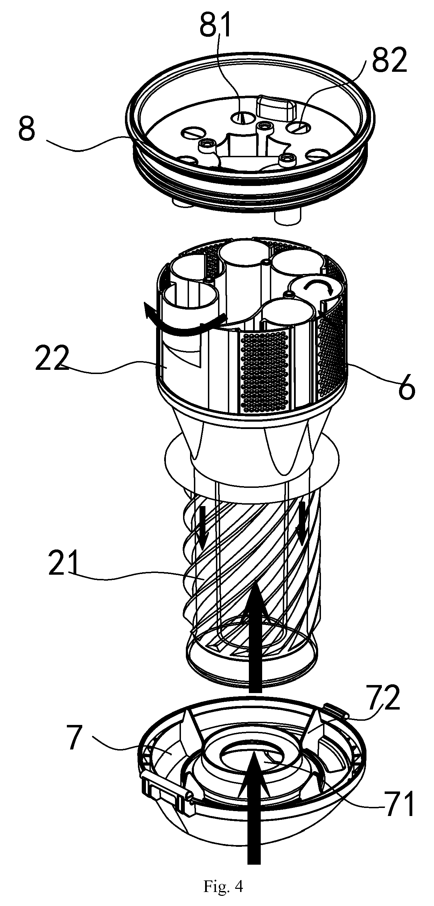

In some embodiment, the dust collecting assembly further includes a secondly separating member 8. As shown in Fig.4, the secondly separating member 8 is disposed in the dust cup 1 and connected with an upper end of the cyclone separating device 2, which having a plurality of via-holes 81 corresponding to the upper ends 2214 of the second cyclone 221 respectively, so that the clean air may be discharged through the via-holes 81 and the outlet passage 51. The arrow direction in Fig.5 represents the direction of the air stream. Alternatively, there is a stopping rib 82 in each via-hole 81. The stopping rib 82 is extended parallel to the longitudinal axis X, so as to guiding the clean air out steadily.

As shown in Fig.4, in one embodiment, a plurality of splitters 72 are formed on the lower cover 7, and radially extended toward the first longitudinal axis in a plane through which the first longitudinal axis penetrates. In other words, the splitters 72 are located in the plane through which the first longitudinal axis penetrates respectively. Thus, the splitters 72 may divide the lower cover 7 into a plurality of spaces spaced apart from each other, such that it is possible to prevent swirls from being generated at the lower cover 7, and to restrict dust within the plurality of spaces spaced apart from each other.

Alternatively, the dust collecting assembly 100 further includes a filter element 9 disposed between the secondly separating member 8 and the upper cover 5, for further filtering the air from the via-holes 81, thus enhancing the filtering efficiency. In addition, as shown in Fig.5, a first seal ring is disposed between the secondly separating member 8 and the cyclone separating device 2. A second, third, and fourth seal rings 92, 93 and 94 are successively disposed between the lower cover 7 and the dust cup 1. Specially, the second seal ring 92 is disposed between the lower cover 7 and the dust cup 1; the third seal ring 93 is disposed between the fine-dust collector 2122 and the lower cover 7; and the fourth seal ring 94 is disposed between the inlet conduit 211 and the lower cover 7.

Moreover, there are some other members and structures in the dust collecting assembly 100, for example, as shown in Fig.5, latches may be used to connect the dust cup 1 with upper cover 5 and the lower cover 7 respectively; a cup handle 96 is provided on the upper cover 5; etc.

Then, the operation and use of the dust collecting assembly 100 according to embodiments of the invention will be described below with reference to the drawings, in which an arrow direction represents the direction of the air stream.

As shown in Figs. 1-4, the dust-laden air is guided into the first cyclone separating space A through the inlet passage 23 and the first guide channel 24, and enters into the first cyclonic separating space A. After the primary separation, the large particles drops into the dust collecting chamber 3 between the outer barrel 212 and the dust cup 1, while the primarily-separated air surrounding the outer circumferential of the cyclone assembly may move tangentially into the second cyclones 221 through the filtering member 6 and the notch 2211, thus being cleaned and separated further in a second cyclone separating space B. After the secondary cleaning and separating is performed in the second cyclones 221, the separated large particles or dust are dropped into the dust collecting space 4 under the second cyclones 221, meanwhile the clean air is discharged out from an exhaust opening in a motor housing 200, successively through the outlet passage 51 of the upper cover 5, a housing passage 610 of a upright housing 600, the motor housing 200 under the upright housing 600.

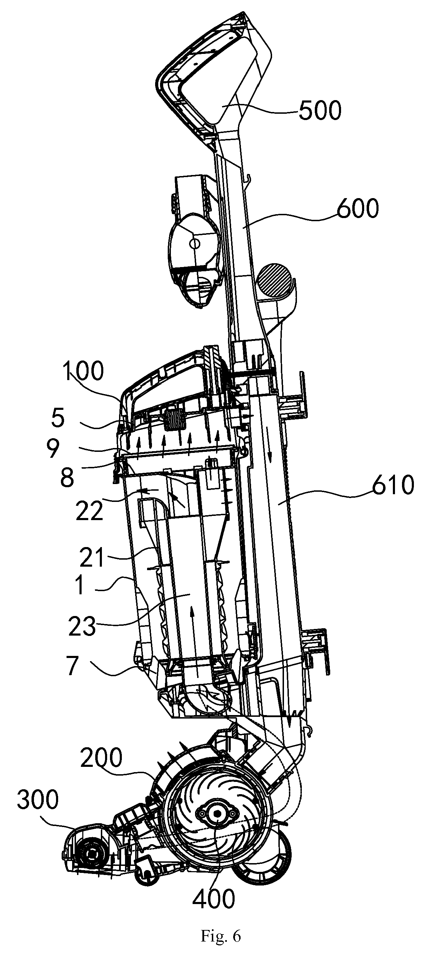

The cleaner according to embodiments of the present disclosure will be described below in detail with reference to Fig. 6. As shown in Fig.6, the cleaner includes the dust collecting assembly 100 abovementioned. Alternatively, the cleaner is an upright vacuum cleaner. In addition, there are some other members and structures in the cleaner, for example, the nozzle 300, a motor 400 in the motor housing 200, a handle 500 and the upright housing 600, etc., which will not be described in detail herein.

It should be noted that, in the specification of the present disclosure, expressions "air flow" and "fluid" may refer to the same substance, for example, the flow containing dust which is to be separated and purified. Alternatively, the expression "fluid" may be understood broadly. In some embodiments, the fluid may include the air flow. In some embodiments, the fluid may include other flows, such as liquid flow or the like.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "In some embodiments", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

## Claims

1. A cyclone separating device (2), comprising:
a first cyclone (21) defining a longitudinal axis and an inlet passage (23) which defines a first inlet (2111) and a first outlet (2112);
a cyclone assembly (22) comprising a plurality of second cyclones (221) which are arranged in parallel at an upper portion of the first cyclone (21) along a circumferential direction of the first cyclone (21), a first guide channel (24) being defined between two second cyclones (221), being communicated with the first outlet (2112) and guiding dust-laden air exiting therefrom along a tangential line of the circumferential wall of the second cyclone (221) to an outer circumferential of the cyclone assembly (22), each second cyclone (221) defining a notch (2211) for introducing the primarily-separated air into the second cyclone (221) tangentially, and each second cyclone (221) defining an opening at each of upper and lower ends thereof;
a filtering member (6) detachably arranged at the outer circumferential side of the cyclone assembly (22),
wherein the primarily-separated air surrounding outer circumferential of the cyclone assembly (22) is tangentially introduced into the second cyclones (221) respectively via the filtering member (6) and the notch (2211).

2. The cyclone separating device (2) according to claim 1, wherein pluralities of filtering members (6) are provided and disposed detachably corresponding to the notches (2211) of the second cyclones (221) respectively.

3. The cyclone separating device (2) according to claim 1, wherein one filtering member (6) is provided and formed to be a C-shape covering at least a part of the outer circumferential surface except the first guide channel (24);
preferably, the filtering member (6) is a filtering screen or an inserting piece having filtering holes (61);
particularly preferably, each filtering member (6) is pluggably connected with the cyclone assembly (22) respectively.

4. The cyclone separating device (2) according to claim 3, wherein an inserting groove (2212) is formed in a side wall surface of each second cyclone assembly (22) away from the longitudinal axis, and the filtering members (6) are configured to pluggably insert into the inserting grooves (2212) respectively.

5. The cyclone separating device (2) according to any one of claims 1-4, wherein each filtering member (6) has an arc shape, and the plurality of the filtering members (6) define a substantially cylindrical outer circumferential surface with the cyclone assembly (22) when the plurality of filtering members (6) are assembled with the cyclone assembly (22).

6. The cyclone separating device (2) according to any one of claims 1-5, wherein a connecting wall (25) is connected to each second cyclone (221) at one side of the notch (2211) and is tangential to the side wall of the second cyclone (221), and an extension plate (26) is extended from the other side of the notch (2211),
wherein a second guide channel (27) is defined between the connecting wall (25) and the extension plate (26).

7. The cyclone separating device (2) according to claim 6, wherein the connecting wall (25) connected to one second cyclone (221) is extended, connected and tangential to the side wall of another second cyclone (221) adjacent to the one second cyclone (221), the connecting wall (25) at one side of the guide passage is parallel to a tangent line of the outer circumferential wall of the second cyclone (221) at the other side of the guide passage;
preferably, the extension plate (26) is parallel to the connecting wall (25).

8. The cyclone separating device (2) according to any one of claims 1 to 7, wherein a distance between a center of the opening at the lower end of the second cyclone (221) and the longitudinal axis, is smaller than that between a center of the opening at the upper end of the second cyclone (221) and the longitudinal axis.

9. The cyclone separating device (2) according to any one of claims 1 to 8, wherein the first cyclone (21) comprises:
an inlet conduit (211) extended along the longitudinal axis and defining upper and lower ends, the inlet passage (23) being defined by the inlet conduit (211), the first inlet (2111) being defined by the upper end of the inlet conduit (211) and the first outlet (2112) being defined by the lower end of the inlet conduit (211), a part of the side wall of the upper end of the air let conduit is cut to extend from the inlet conduit (211) upwardly and spirally;
an outer barrel (212) surrounding the inlet conduit (211) to define an annular dust collecting space, the lower end of each second cyclone (221) being extended into the dust collecting space;
preferably, the first cyclone (21) and the second cyclones (221) are integrally formed;
particularly preferably, the dust collecting space (4) defining a central axis coinciding with the longitudinal axis.

10. The cyclone separating device (2) according to claim 9, wherein the outer barrel (212) comprises:
a support (2121) surrounding the inlet conduit (211);
a fine-dust collector (2122) surrounding the inlet conduit (211) and disposed under the support (2121), the lower end of each second cyclone (221) being extended into the fine-dust collector (2122).

11. The cyclone separating device (2) according to claim 9, wherein a projection of the first guide channel (24) in a plane substantially perpendicular to the longitudinal axis has a helical or an arc shape.

12. A dust collecting assembly, comprising:
a dust cup (1);
a cyclone separating device (2) according to any one of claims 1 to 11, the cyclone separating device (2) disposed within the dust cup (1), wherein a first cyclone separating space (A) is defined between the outer circumferential side of the first cyclone (21) and the cyclone assembly (22) and an inner wall of the dust cup (1);
an upper cover (5) disposed on a top of the dust cup (1) and defining an outlet passage (51) for discharging the air from the cyclone separating device (2);
a lower cover (7) disposed at a bottom of the dust cup (1) and defining an inlet hole (71) communicated with the first inlet (2111) of the first cyclone (21).

13. The dust collecting assembly according to claim 12, further comprising:
a secondly separating member (8) disposed in the dust cup (1) and connected with an upper end of the cyclone separating device (2), which having a plurality of via-holes (81) corresponding to the upper ends of the second cyclone (221) respectively.

14. The dust collecting assembly according to claim 13, further comprising:
a filter element (9) disposed between the secondly separating member (8) and the upper cover (5).

15. A cleaner, comprising a dust collecting assembly according to any one of claims 12 to 14.
